**Europäisches Patentamt**

**European Patent Office**

**Office européen des brevets**

(19)

(11) Veröffentlichungsnummer : **0 376 150 B1**

(12) # EUROPÄISCHE PATENTSCHRIFT

(45) Veröffentlichungstag der Patentschrift :
**11.11.92 Patentblatt 92/46**

(51) Int. Cl.⁵ : **F01P 9/00, F01M 1/16,
F01M 5/00**

(21) Anmeldenummer : **89123600.2**

(22) Anmeldetag : **21.12.89**

(54) **Brennkraftmaschine mit zwei hydraulischen Flüssigkeitskreisläufen.**

(30) Priorität : **24.12.88 DE 3843827**

(43) Veröffentlichungstag der Anmeldung :
**04.07.90 Patentblatt 90/27**

(45) Bekanntmachung des Hinweises auf die
Patenterteilung :
**11.11.92 Patentblatt 92/46**

(84) Benannte Vertragsstaaten :
**AT DE ES FR GB IT NL**

(56) Entgegenhaltungen :
**WO-A-81/00881**
**DE-A- 3 633 576**
**FR-A- 869 652**
**GB-A- 2 079 871**

(73) Patentinhaber : **Klöckner-Humboldt-Deutz AG**
**Otto Strasse 1**
**W-5000 Köln 90 (DE)**

(72) Erfinder : **Wahnschaffe, Jürgen**
**Hessestrasse 8**
**W-5060 Bergisch Gladbach 4 (DE)**
Erfinder : **Hartmann, Ernst-Siegfried**
**Waldenburger Strasse 7**
**W-5063 Overath (DE)**
Erfinder : **Krause, Horst-Herbert, Dr.**
**Wollreffenweg 125**
**W-7110 Öhringen (DE)**
Erfinder : **Haas, Eckhard**
**Ursularstrasse 5**
**W-5000 Köln 90 (DE)**
Erfinder : **Fuchs, Wolfgang**
**Stresemannstrasse 7**
**W-5630 Remscheid 11 (DE)**
Erfinder : **Rechberg, Reinhard**
**Ernst-Moritz-Arndt-Strasse 11**
**W-5205 St. Augustin 1 (DE)**
Erfinder : **Lemme, Werner**
**Im Hof 38**
**W-5064 Rösrath (DE)**

EP 0 376 150 B1

## Beschreibung

Die Erfindung betrifft eine Brennkraftmaschine mit zumindest zwei hydraulischen Flüssigkeitskreisläufen nach dem Oberbegriff des Anspruchs 1.

Flüssigkeitskreisläufe mit parallelen Kreisen bei einer Versorgungseinheit, die im allgemeinen durch eine Flüssigkeitspumpe versorgt werden und bei denen ein Kreislauf mit Steuerventilen mit einem bestimmten Öffnungsdruck und mit einer bestimmten Durchflußcharakteristik behaftet ist, weisen im allgemeinen unter bestimmten instationären Betriebsbedingungen eine mangelhafte Versorgung eines der beiden parallelen Kreisläufe auf. Dies tritt z. B. an ölgekühlten Verbrennungskraftmaschinen mit Ölpumpe zur Versorgung der Schmier- und des Kühlölkreislaufes auf, sofern die Fördermenge der Flüssigkeitspumpe drehzahlabhängig ist. In solchen Fällen kann die Unterversorgung des mit Ventilen mit einem bestimmten Öffnungsdruckes versehenen Kreislaufes infolge Unterschreitung des Öffnungsdruckes - aufgrund des geringen Widerstandes des mit Drosseln ausgestatteten Kreises - eintreten.

Die Druckschrift DE-A 36 33 576 beschreibt eine Brennkraftmaschine, deren Kühlöl- und Schmierölkreislauf parallel geschaltet sind und von einer gemeinsamen Ölpumpe gespeist werden. In Strömungsrichtung hinter der Ölpumpe ist ein Überdruckventil angeordnet. Am Kühlölkreislauf ist ein Motorölkühler und eine Heizung vor einem Ölhalteventil angeschlossen.

Im Kühlölkreislauf ist ein Vorrangventil eingebaut, welches die Aufgabe hat, den Schmierölkreislauf vorrangig mit Öl zu versorgen. In Strömungsrichtung hinter diesem Ventil ist eine Drossel angeordnet, die als Bohrung im Gehäuse der Brennkraftmaschine ausgebildet ist. Ist das fließende Öl noch kalt und dickflüssig, so staut sich das Öl vor der Drossel, wodurch der Öldruck dort steigt und das Überdruckventil in der Öl-Rückführleitung öffnet. Die angestaute Ölmenge fließt dann in den Ölsumpf zurück und wird von neuem von der Ölpumpe befördert.

Nachteilig dabei ist, daß in der Anfahrphase des Motors eine große Ölmenge in dem kurzgeschlossenen Kreislauf zwischen Ölpumpe und Überdruckventil mit Energieverlust zirkuliert ohne jemals zum Wärmetauscher hin gelangen zu können.

Der Erfindung liegt die Aufgabe zugrunde, parallel geschaltete Ölkreisläufe bei einer Brennkraftmaschine so zu gestalten, daß eine sichere Ölversorgung eines Schmieröl- und eines Kühlölkreislaufes bei allen Betriebsphasen der Brennkraftmaschine sichergestellt ist, insbesondere im Bereich niedriger Drehzahlen, bei denen die geförderte Ölmenge unter geringem Druck steht.

Ferner soll sichergestellt werden, daß bei tiefen Temperaturen und Vorhandensein von Kaltölstopfen im Ölkühler die Motorkühlung mit Öl aufrechterhalten bleibt.

Erfindungsgemäß wird die Aufgabe durch die kennzeichnenden Merkmale des unabhängigen Patentanspruchs gelöst.

In den Kühlölkreislauf ist zusätzlich zu dem Druckventil, das erst bei einem bestimmten Druck öffnet, ein weiteres Druckventil mit einer Bypaßdrossel integriert. Dadurch wird die Unterversorgung des Kühlölkreises dadurch umgangen, daß eine Mindestversorgung dieses Kreises durch die Ölmenge, welche durch den Bypaß, unabhängig von der Ventilöffnung, hinfließt, ermöglicht wird. Die Ölpumpe ist so ausgelegt, daß sie in der Lage ist, die Summe der maximal notwendigen Durchflußmengen des Schmieröl- und des Kühlölkreises zu liefern.

Zusätzlich oder alternativ ist parallel zu dem Rückkühler ein weiteres Steuerventil angeordnet, dessen Thermostat schieber so ausgebildet ist, daß dieser neben seiner Ther mostatfunktion auch als Druckventil arbeitet. Der Ther mostatschieber ist so gestaltet, daß dieser durch den am Schieber anliegenden Differenzdruck bei kaltem Ölzustand einen weiteren Weg als bisher zurücklegen kann und eine Rückkühlerumgehung freigibt. Eine Kühlölversorgung bei kaltem Zustand des Motors wird so aufrechterhalten, und gleich zeitig wird der Rückkühler weiterhin mit dem am Schieberventil anliegenden Differenzdruck beaufschlagt und von evtl. vorhandenen Kaltölstopfen befreit werden. Danach arbeitet der Thermostatschieber wieder temperaturabhängig, da der Differenzdruck bei betriebswarmem Motor geringer als die Federkraft ist. Die möglichen Funktionsstellungen des Thermostatschiebers werden später näher erläutert.

Das im Heizungskreislauf eingebaute Drucksteuerventil steuert so, daß die Heizung optimal mit Wärme versorgt wird und sichert gegen Leerlaufen des Systems und der Heizung im Stand.

Das im Ölkühlerkreislauf eingebaute Steuerventil ist so ausgebildet, daß dieser neben seiner Thermostatfunktion bedingt durch den anliegenden Differenzdruck als Druckventil arbeitet, und bei tiefen Temperaturen den Rückkühler umgeht, wodurch ein Kühlöldurchfluß freigegeben wird. Nach der Warmlaufphase arbeitet der Thermostatschieber des Steuerventils wieder temperaturabhängig, sodaß bei allen Betriebstemperaturen die Motorkühlung mit Öl aufrechterhalten bleibt.

In Weiterbildung ist die Bypaßdrossel als Bohrung im Ventilkörper gestaltet, welche in Verbindung mit einem Querkanal steht, wobei der Durchmesser und die Länge der Bohrung sowie mögliche Umlenkungen in der Summe der vorliegenden Gegebenheiten im Hinblick auf die erforderliche Mindestmenge abgestimmt werden können.

In Weiterbildung ist der Bypaßdrossel als eine Bohrung im Ventilkörper ausgebildet, welche in Verbindung mit im Bereich der Bolzenführung genuteten Abströmkanälen steht. Dadurch wird ermöglicht, daß die Flüssigkeit von der Eingangsseite zu der Ausgangsseite immer durch die o. g. Bohrung und die damit verbundenen Nuten fließt.

Bei gepreßten (gesinterten), geschmiedeten oder mit ähnlichen Verfahren hergestellten Ventilkörpern werden deren Sitzflächen mit Umfangsnuten versehen, die für Umsteuerung bei relativ großen Bypaßmengen sorgen.

Bei Ventilkörpern in massiver Schieberbauart sind die Bypaßdrosselkanäle in Form von Schlitzen am Umfang des Ventilkörpers hergestellt, die den Flüssigkeitsdurchfluß vom Eingang zum Ausgang unter der Wirkung der Ventilfeder regelt.

Bei Ventilkörpern, die aus Blechschiebern ausgebildet sind, werden die Bypaßdrosselkanäle als am Umfang des Schiebers angebrachten Sicken hergestellt, die ebenfalls für eine ununterbrochene Versorgung mit der Flüssigkeit sorgen.

Zur weiteren Erläuterung der Erfindung wird auf die Zeichnungen verwiesen, in denen bevorzugte Ausführungsbeispiele der Erfindung vereinfacht dargestellt sind.

Es zeigt:

Fig. 1: ein Leitungsschema eines Schmierölkreislaufes mit einer Ölpumpe zur Versorgung von zwei parallel zueinander laufenden Ölkreisläufen, wobei eine der Kreisläufe mit den erfindungsgemäßen Bypaßdrosseln am Steuerventil ausgerüstet ist,

Fig. 2: einen Querschnitt durch ein Kegelsteuerventil mit verschiedenen Ausführungen des Bypaßdrosselkanals,

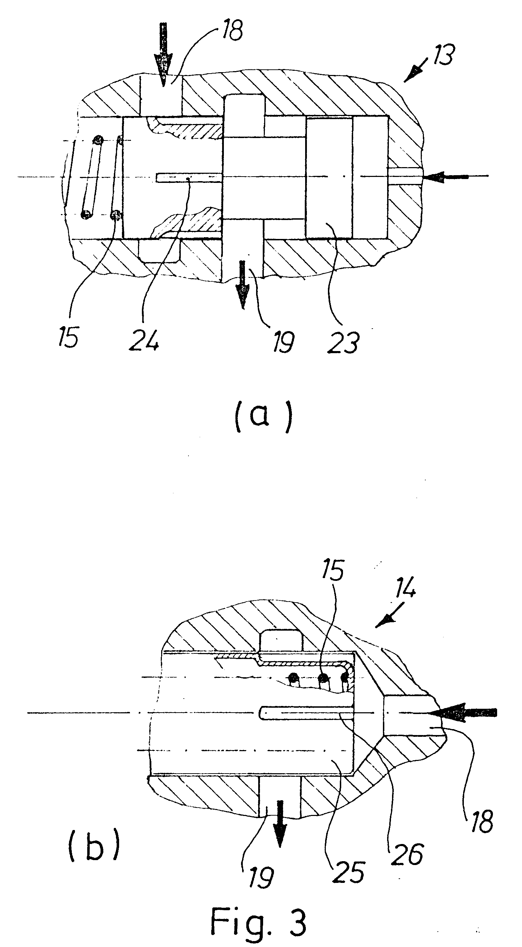

Fig. 3: einen Querschnitt durch ein Schieberventil
    a) mit massivem Ventilkörper und Schlitze am Umfang,
    b) mit Ventilkörper aus Blech und Sicken am Umfang.

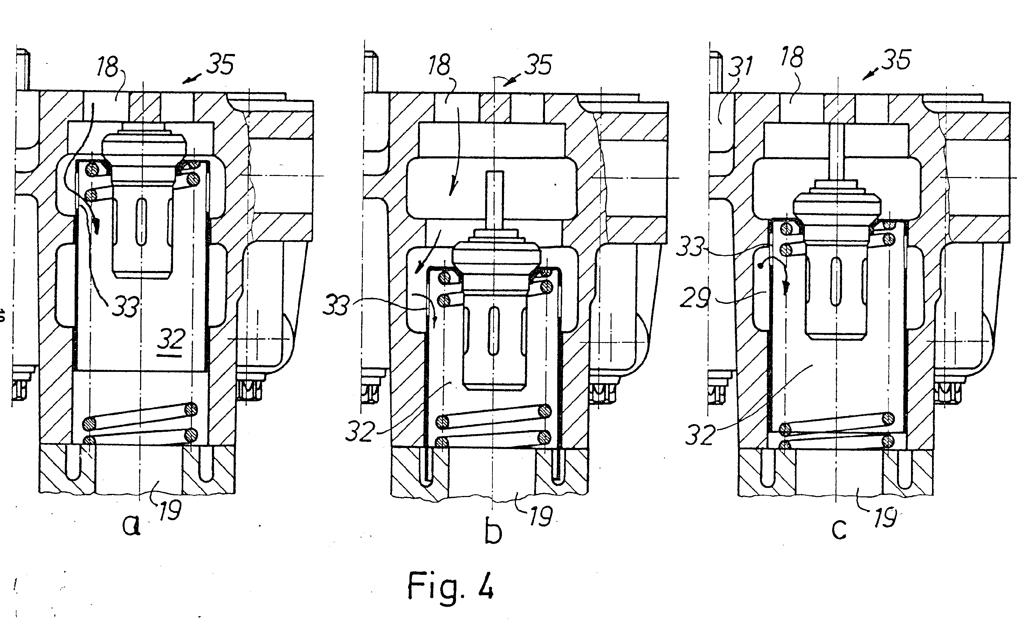

Fig. 4: einen Querschnitt durch das im Kreislauf des Ölkühlers eingebaute Steuerventil bei folgenden Funktionsstellungen:
    a) Motor kalt, Thermostatschieber zu
    b) Motor in der Anlaufphase, Thermostatschieber weit offen, und der Ölkühler ist mit dem Öldifferenzdruck beaufschlagt
    c) Motor warm, Rücklauf offen, und das Kühlöl geht durch den Ölkühler

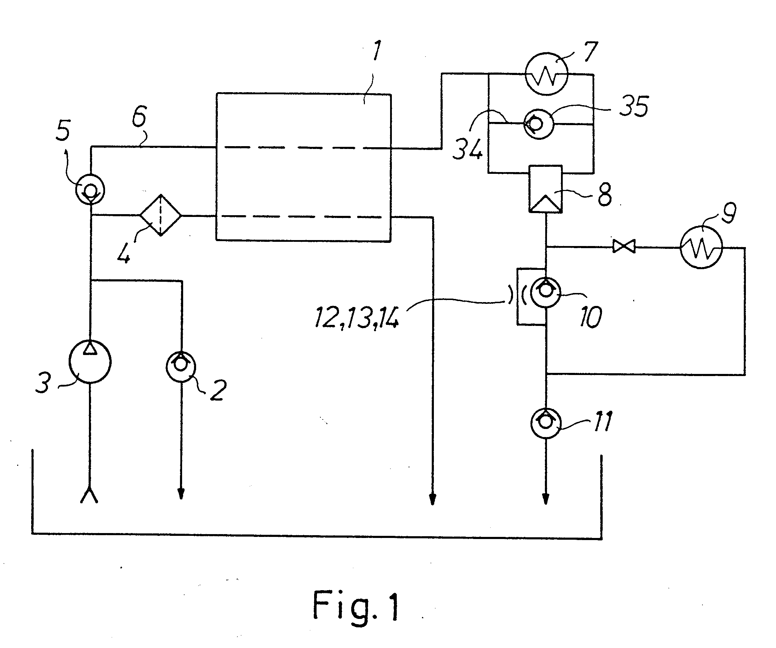

Fig. 1 zeigt ein Leitungsschema eines Schmierölkreislaufes einer Brennkraftmaschine 1 mit einer Ölpumpe 3 und einem Absteuerventil 2. Über einem Rücklaufventil 5 wird durch den Strang 6 den Kühlölkreislauf zur Zylinderkühlung mit Öl versorgt. Durch einen zweiten Kreis fließt das Öl zur Motorschmierung über einen Filter 4, um von dort über einen Kühler 7 mit Thermostat 8 eine Heizung 9 mit warmem Öl zu versorgen. Im Heizungskreislauf ist ein Heizungsdruckventil 10 und ein Rücklaufventil 11 installiert, wobei parallel zu dem Heizungsdruckventil 10 das erfindungsgemäße weitere Druckventil 12, 13, 13 untergebracht ist. Durch das Bypaßdrosselventil wird bei niedrigen Betriebsdrehzahlen eine Mindestversorgung des mit Ventilen versehenen Ölkreises gewährleistet. Eine Unterversorung dieses Kreislaufes infolge Unterschreitung des Öffnungsdruckes des Ventiles, aufgrund des geringen Widerstandes des mit Drosseln ausgestatteten Kreises, wird somit unterbunden bzw. wirksam begegnet.

Im Ölkühlerlkreislauf ist ein Steuerventil 35 in einer Bypassleitung 34 untergebracht. Der Thermostatschieber 32 dieses Druckventils ist so ausgebildet, daß dieser neben seiner Thermostatfunktion, bedingt durch den anliegenden Differenzdruck, auch als Druckventil arbeitet. Damit soll erreicht werden, daß auch bei kaltem Motor die Kühlung aufrechterhalten bleibt.

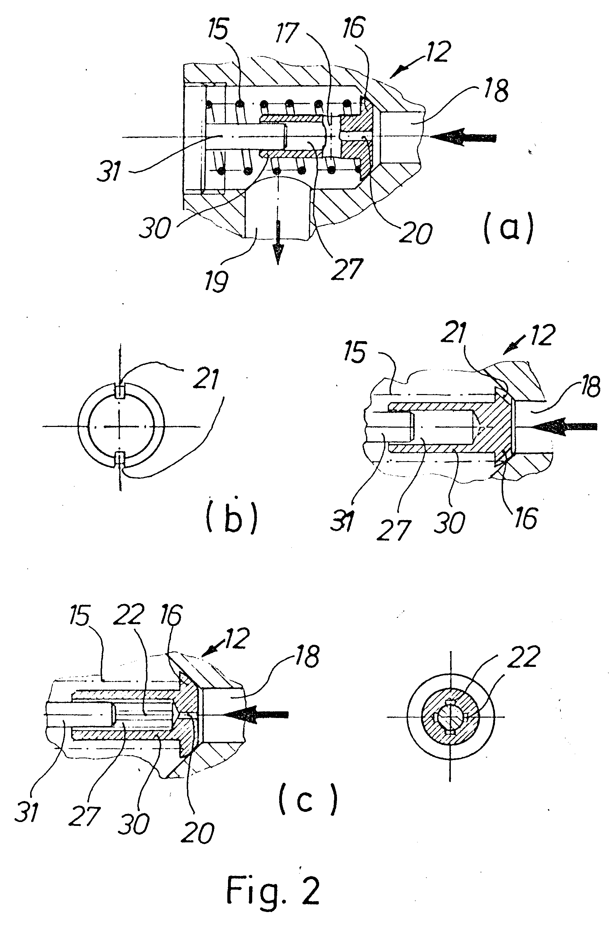

Fig. 2 zeigt einen Querschnitt des als Kegelsteuerventil ausgebildeten Steuerventils 12 mit verschiedenen Ausführungen des Bypaßdrosselkanals. Das Ventilgehäuse hat einen Öleingang 18 und einen Ölausgang 19. Darin ist ein Ventilkörper 30 mit einer Bolzenführung 27, worin der Bolzen 31 axial eingeführt ist. Der Ventilkörper steht unter dem Druck einer Feder 15 und schließt mit seinem Kegelsitz 16 die Öffnung des Öleinganges 18 dicht.

Bei der Ausführung "a" in Fig. 2 ist die Bypaßdrossel als Bohrung 20 im Ventilkörper 30 ausgebildet, die axial verläuft und in einen Querkanal 17 mündet. Diese Bypaßdrosselbohrung verbindet den Öleingang 18 über den Querkanal mit dem Ölausgang 19, so daß in jedem Fall, auch wenn der Ventilsitz 16 bei niedrigen Drehzahlen nicht abhebt, eine gewisse Ölmenge durch diese Bohrung durchfließt und den entsprechenden Ölkreislauf versorgt. Je nach Einsatz und Funktion werden der Durchmesser und die Länge der Bypaßdrosselbohrung 20 auf die erforderliche Mindestmenge abgestimmt.

## Patentansprüche

1. Brennkraftmaschine (1) mit einem Schmieröl- und einem Kühlölkreislauf (6), die parallel geschaltet sind und von einer gemeinsamen Quelle mittels einer Pumpe (3) gespeist werden, wobei der Schmierölkreislauf drosselnde Widerstände (4) aufweist und der Kühlölkreislauf einen Rückkühler (7) mit einem zu ihm in Bypass angeordneten Thermostatventil (8) und stromab des Rückkühlers (7) im Bypass zu einer Heizung (9) ein Druckventil (10) aufweist, dadurch gekennzeichnet, daß zu dem Druckventil (10) ein weiteres Druckventil (12, 13, 14) parallel geschaltet ist, wobei eine by paßdrossel parallel zu dem weiteren Druckventil (12,13,14) geschaltet ist, die während des Betriebes der Brennkraftmaschine eine bestimmte Menge Öl durchläßt und/oder ein weiteres parallel zum Rückkühler (7) angeschlossenes Steuerventil (35) einen Thermostatschieber (32) aufweist, der auch als Druckventil arbeitet.

2. Brennkraftmaschine nach Anspruch 1,
dadurch gekennzeichnet, daß das weitere Druckventil (12) mit einem Ventilkörper (30) mit kegelförmigem Ventilsitz (16) ausgerüstet ist, welcher eine Bolzenführung (27) aufweist, zu dem parallel eine Ventilfeder (15) angeordnet ist.

3. Brennkraftmaschine nach Anspruch 1,
dadurch gekennzeichnet, daß die Bypaßdrossel als eine Bohrung (20) im Ventilkörper ausgebildet ist, welche in Figur 4 zeigt die Funktion des im Kühlölkreislauf angebrachten Steuerventils 35 mit den verschiedenen Lagen des Thermostatschiehers.
Variante "a" stellt die Lage des Thermostatschiehers bei kaltem Motor dar. Das vorn Motor kommende Öl (Öleingang 18) fließt durch die am Thermostatschieber angebrachte Öffnung 33 durch und wird unter Umgehung des Ölkühlers 7 direkt zur Ölwanne abgeleitet.
Bei Variante "b" wirkt der Thermostatschieber 32 als Druckventil, welches durch den anliegenden Differenzdruck anhebt und einen weiteren Weg als bisher zurücklegt. Das vom Motor kommende Öl wird wie bei Variante "a" weitergeleitef, und der ölkühler wird gleichzeitig mit dem am Schieherventil anliegenden Differenzdruck beaufschlagt und von noch evtl. vorhandenen Kaltölstopfen freigedrückt.

Wird die Phase erreicht, wo das Öl warm geworden ist und der Ölkühler freigedrückt ist, so arbeitet der Therrnostatschieber gemäß Variante "c" wieder "normal" in Abhängigkeit von der Öltemperatur. Das Öl fließt durch die Öffnung 31 zum Ölkühler hin, wird dort gekühlt und strömt durch die Öffnung 29 aus. Die nun auf der gleichen Höhe liegende Thermostatschieber-Öffnung 33 leitet das Öl weiter, wo diese von dort durch den Ölausgang 19 zur Ölwanne hinfließt.

Ausführung "b" in Fig. 2 verfügt über eine Bypaßdrossel 21, die in Form von Nuten hergestellt ist, welche am Umfangsmantel des kegelförmigen Ventilsitzes 16 verlaufen und den Öleingang 18 mit dem Öleingang (hier nicht abgebildet) verbindet. Diese Ausführung ist empfehlenswert, wenn der Ventilkörper aus gesintertem oder geschmiedetem Teil hergestellt ist, und große Bypaßdurchflußmengen gewünscht sind.

Bei releativ geringen Bypaßmengen hingegen eignet sich die Ausführung "c", Fig. 2, wobei die vorher abgestimmte Bohrung 20, ähnlich Variante "a", die Ölmenge über Abströmkanäle 22 zum Ölausgang (hier nicht abgebildet) hin transportiert. Die Abströmkanäle 22 sind axial im Bereich der Bolzenführung 27 angebracht, und können bezüglich Anzahl und Abmessung entsprechend der Erfordernisse abgestimmt werden.

Figur 3 zeigt zwei Druckventilausführungen 13 und 14 mit Schieberventilkörper, wobei die Variante "a" einen Ventilkörper 23 in massiver Schieberbauart aufweist. Bei Variante "a" sind die Bypaßdrosselbohrungen 24 in Form von am Umfang des Ventilschiebers 23 angebrachten Schlitze festgestellt, die bei einer vorgegebenen Schieberlage den Öleingang 18 mit dem Ölausgang 19 verbindet, und den Durchfluß einer bestimmten Ölmenge erlaubt, die von Anzahl und Abmessungen der Schlitze abhängt.

Variante "b" in Fig. 3 stellt ein Ventilkörper als Blechschieber dar, dabei werden Sicken 26 am Umfang des Blechschiebers hergestellt, die, wie bei Variante "a", Fig. 3, den Transport von einer vorher bestimmten Ölmenge übernimmt.

Verbindung mit einem Querkanal (17) steht und den Flüssigkeitseingang (18) mit der Abflußöffnung (19) verbindet.

4. Brennkraftmaschine nach Anspruch 1,
dadurch gekennzeichnet, daß die Bypaßdrossel als eine Bohrung (20) im Ventilkörper ausgebildet ist, welche in Verbindung mit mindestens einem Abströmkanal (22) steht, der axial im Bereich der Bolzenführung (27) liegt.

5. Brennkraftmaschine nach Anspruch 1,
dadurch gekennzeichnet, daß die Bypaßdrossel aus mindestens einer Nut (21) besteht, welche am Umfangsmantel des kegelförmigen Ventilsitzes (16) angebracht ist.

6. Brennkraftmaschine nach Anspruch 1,
dadurch gekennzeichnet, daß das weitere Druckventil (13) mit einem Ventilkörper (23) in massiver Schieberbauart ausgerüstet ist und die Bypaßdrossel in Form von am Umfang des Ventilkörpers angebrachten Schlitze (24) ausgebildet ist.

7. Brennkraftmaschine nach Anspruch 1,
dadurch gekennzeichnet, daß das weitere Druckventil (14) mit einem Ventilkörper (25) als Hohlschieber ausgerüstet ist und die Bypaßdrossel in Form von am Umfang des Ventilkörpers angebrachten Sicken (26) ausgebildet ist.

**Claims**

1. An internal-combustion engine (1) having a lubricating-oil and a cooling-oil loop (6) which are connected in parallel with one another and are fed from a common source by means of a pump (3), the lubricating-oil loop comprising constricting resistors (4) and the cooling-oil loop comprising a heat exchanger (7) wits a thermostatic valve (8) arranged in by-pass to it, and a delivery valve (10) downstream of the heat exchanger (7) in by-pass to a heating system (9), characterised in that a further delivery valve (12, 13, 14) is connected in parallel with the delivery valve (10), while a by-pass constriction is connected in parallel with the further delivery valve (12, 13, 14), which constriction during the operation of the internal combustion engine permits the passage of a specific quantity of oil, and/or a further control valve (35) connected in parallel to the heat exchanger (7) comprises a thermostatic slide valve (32) which also works as a delivery valve.

2. An internal-combustion engine according to Claim 1, characterised in that the further delivery valve (12) is equipped with a valve body (30) with conical valve seating (16), which comprises a bolt guide (27) parallel to which a valve spring (15) is arranged.

3. An internal combustion engine according to Claim 1, characterised in that the by-pass constriction is formed as a bore (20) in the valve body which is in communication with a transverse passage (17) and connects the liquid entry (18) with the outflow opening (19).

4. An internal combustion engine according to Claim 1, characterised in that the by-pass constriction is formed as a bore (20) in the valve body which is in communication with at least one outflow passage (22) which lies axially in the region of the bolt guide (27).

5. An internal combustion engine according to Claim 1, characterised in that the by-pass constriction comprises at least one groove (21) which is provided on the periphery of the conical valve seat (16).

6. An internal combustion engine according to Claim 1, characterised in that the further delivery valve (13) is equipped with a valve body (23) of solid slide-valve construction type and the by-pass constriction is made in the form of slots (24) provided on the circumference of the valve body.

7. An internal combustion engine according to Claim 1, characterised in that the further delivery valve (14) is equipped with a valve body (25)as a hollow slide valve, and the by-pass constriction is made in the form of corrugations (26) provided on the circumference of the valve body.

## Revendications

1. Moteur à combustion interne (1) avec un circuit d'huile de lubrification et un circuit d'huile de refroidissement (6), qui sont montés en parallèle et sont alimentés par une source commune au moyen d'une pompe (3), dans lequel le circuit d'huile de lubrification présente des résistances formant étranglement (4) et le circuit d'huile de refroidissement présente un radiateur de retour avec une soupape thermostatique (8) qui lui est associée en dérivation et en aval du radiateur de retour présente en dérivation par rapport à un dispositif de chauffage (9) une soupape de compression (10), moteur à combustion interne caractérisé en ce qu'on monte une autre soupape de compression (12, 13, 14) en parallèle à la soupape (10), un étranglement en dérivation étant monté en parallèle à l'autre soupape de compression (12, 13, 14), qui laisse passer pendant le fonctionnement du moteur à combustion une quantité déterminée d'huile et/ou une autre soupape de commande (35) raccordée en parallèle au radiateur de retour (7) présente un tiroir thermostatique (32), qui fonctionne aussi comme soupape de compression.

2. Moteur à combustion interne selon la revendication 1, caractérisé en ce que l'autre soupape de compression (12) est équipée d'un corps de soupape (30) avec un siège de soupape de forme conique (16), qui présente un guidage d'axe (27), un ressort de soupape (15) étant disposé parallèlement à celui-ci.

3. Moteur à combustion interne selon la revendication 1, caractérisé en ce que l'étranglement en dérivation est constitué comme un alésage (20) dans le corps de soupape qui est en liaison avec un canal transversal et relie l'entrée du liquide (18) avec l'orifice d'évacuation (19).

4. Moteur à combustion interne selon la revendication 1, caractérisé en ce que l'étranglement en dérivation est constitué comme un alésage (20) dans le corps de soupape qui est en liaison avec au moins un canal d'écoulement (22) qui occupe une position axiale dans la zone du guidage d'axe (27).

5. Moteur à combustion interne selon la revendication 1, caractérisé en ce que l'étranglement en dérivation consiste en au moins une rainure qui est disposée sur le pourtour du siège de soupape en forme de cône (16).

6. Moteur à combustion interne selon la revendication 1, caractérisé en ce que l'autre soupape de compression (13) est équipée d'un corps de soupape (23) construit comme un tiroir massif et l'étranglement en dérivation est constitué sous la forme d'une fente (24) disposée sur la périphérie du corps de soupape.

7. Moteur à combustion interne selon la revendication 1, caractérisé en ce que l'autre soupape (14) est équipée d'un corps de soupape (25) formé comme un tiroir creux et l'étranglement en dérivation est constitué sous la forme de moulures (26) disposées sur la périphérie du corps de soupape.

Fig.1

EP 0 376 150 B1

Fig. 2

(a)

(b)

Fig. 3

Fig. 4

EP 0 376 150 B1